# EUROPÄISCHE PATENTSCHRIFT

(11) **EP 3 598 637 B1**
(45) Veröffentlichungstag und Bekanntmachung des Hinweises auf die Patenterteilung: **12.10.2022**
(21) Anmeldenummer: 18184871.4
(22) Anmeldetag: 21.07.2018
(51) Int. Cl.: H02S 20/26

(54) **PHOTOVOLTAIKSYSTEM**
PHOTOVOLTAIC SYSTEM
SYSTÈME PHOTOVOLTAÏQUE

(43) Veröffentlichungstag der Anmeldung: 22.01.2020
(73) Patentinhaber: Lapp Engineering AG, 6330 Cham (CH)
(72) Erfinder: KRECH, Johann, 72160 Horb am Necker (DE); KURZ, Stefan, 70567 Stuttgart (DE); DROTLEFF, Rolf, 75392 Deckenpfronn (DE); SEGRT, Ivica, 75392 Deckenpfronn (DE)
(74) Vertreter: Rutz & Partner

(56) Entgegenhaltungen:
- EP-A1- 2 442 371
- DE-A1-102009 030 463
- US-A1- 2008 302 031

## Beschreibung

Die Erfindung betrifft einen Photovoltaiksystem mit wenigstens einem Photovoltaikmodul und zwei Anschlussmodulen sowie einen Steckverbinder mit den beiden Anschlussmodulen. Photovoltaikmodule werden als Bauelemente vermehrt in die Gebäudehülle integriert, weshalb Entwicklungen der "Gebäudeintegrierten Photovoltaik" (GiPV) (englisch: Buildingintegrated Photovoltaic (BiPV)) bei der Konstruktion von Gebäuden vermehrt berücksichtigt werden. Diese Entwicklungen betreffen die architektonische, bauphysikalische und konstruktive Einbindung von Photovoltaikmodulen in die Gebäudehülle unter Berücksichtigung baulicher Erfordernisse, wie Witterungsschutz, Wärmedämmung, Abschattung, Ästhetik, Design, Sichtschutz, Schalldämmung, elektromagnetische Schirmdämpfung, Einbruchsschutz, oder Lichtlenkung. (siehe https://de.wikipedia.org/wiki/Gebäudeintegrierte_Photovoltaik) Ein wesentlicher Faktor für die optimale Integration von Photovoltaikmodulen in die Gebäudehülle ist die Anschlusstechnik, mittels der die Verbindung zwischen Photovoltaikmodulen und dazu vorgesehenen Anschlussleitungen erstellt wird.

Gemäss der DE202011000248U1 und der EP2146383A2 wurden installierte Photovoltaikmodule traditionell an der Rückseite mit einer Anschlussvorrichtung verbunden. Zur Realisierung der GiPV-Technologie wird in diesen Dokumenten hingegen vorgeschlagen, die Anschlussvorrichtungen in einem Gehäuse am Rand der Photovoltaikmodule anzuordnen, wodurch der Vorteil resultiert, dass an der Rückseite der Photovoltaikmodule auf Anschlussarbeiten verzichtet werden kann und zudem weniger Raum in Anspruch genommen wird.

Aufgrund der seitlich vorgesehenen Anschlussvorrichtungen resultiert hingegen der Nachteil, dass sich die Wirkungsfläche der installierten Photovoltaikmodule im Verhältnis zur Baufläche reduziert. Zudem ist der Zugriff zu den Anschlussvorrichtungen zwischen den Photovoltaikmodulen wesentlich eingeschränkt, sodass Installationsarbeiten und Reparaturarbeiten, insbesondere Arbeiten zum Austausch eines Photovoltaikmoduls, sich aufwendig gestalten können.

Die US2008/302031A1 zeigt ein Verbindungssystem für dachintegrierte Solarziegel. Das System umfasst eine Reihe von gleichmässig beabstandeten länglichen Leisten, an denen elektrisch verbundene Steckverbinderhälften angeordnet sind.

Die DE102009030463A1 zeigt einen elektrischen Steckverbinder, dessen Geometrie eine gleichmässige Verteilung des durch den Steckverbinder fliessenden elektrischen Stroms ermöglicht. Der Steckverbinder umfasst ein Kontaktelement, dessen Grundkörper einen Kontaktlamellenkorb mit einer ersten und einer zweiten Kontaktzone aufweist.

Der vorliegenden Erfindung liegt daher die Aufgabe zugrunde, ein verbessertes Photovoltaiksystem mit wenigstens einem Photovoltaikmodul, Anschlussmodule für dieses Photovoltaiksystem sowie einen Steckverbinder mit diesen Anschlussmodulen zu schaffen.

Erfindungsgemässe Photovoltaiksysteme sollen in einfacher Weise aufgebaut und gewartet werden können. Die Montage und Demontage einzelner Photovoltaikmodule soll besonders einfach möglich sein, sodass die Installation der Photovoltaikmodule auch an exponierten Stellen eines Gebäudes rasch erfolgen kann. Erfindungsgemässe Anschlussmodule sollen dabei für den elektrischen Anschluss eines fassadenintegrierten Photovoltaikmoduls vorteilhaft verwendbar sein.

Das erfindungsgemässe Photovoltaiksystem soll eine optimale Wirkungsfläche aufweisen und mit optimaler Verbindungstechnik ausgerüstet sein und über lange Zeit, auch unter erschwerten Witterungsverhältnissen, störungsfrei arbeiten können.

Anhand der Anschlussmodule soll die Kontaktierung der Photovoltaikmodule bzw. der Anschluss der Photovoltaikmodule an dazu vorgesehene Anschlussleitungen mit geringem Aufwand erfolgen. Dabei sollen qualitativ hochwertige Verbindungen realisiert werden. Die Verbindung von Anschlusskontakten soll rasch und präzise erfolgen können, vorzugsweise ohne dass die Anschlusskontakte optisch überwacht werden müssen. Arbeiten an der Rückseite der Photovoltaikmodule beim Anschluss der Photovoltaikmodule an die Anschlussleitungen sollen vermieden werden.

Die erfindungsgemässen Anschlussmodule sollen zudem einfach aufgebaut sein und mit geringem Aufwand mit Steckerkontakten bestückbar sein.

Die Anschlussleitungen und Verbindungskontakte sollen dabei keinen Belastungen ausgesetzt sein, sodass qualitativ hochwertige elektrische Verbindungen resultieren und Kontaktprobleme langfristig vermieden werden.

Erfindungsgemässe Anschlussmodule sollen zu einem Steckverbinder zusammen führbar sein, der die darin gehaltenen Steckerkontakte optimal gegen Witterungseinflüsse schützt und eine lange Betriebsdauer gewährleistet.

Erfindungsgemässe Steckverbinder sollen zudem nur wenig Raum in Anspruch nehmen und alle diesbezüglichen Anforderungen der "Gebäudeintegrierten Photovoltaik" (GiPV)-Technologie optimal erfüllen.

Diese Aufgabe wird mit einem Photovoltaiksystem gemäss Anspruch 1 gelöst. Vorteilhafte Ausgestaltungen der Erfindung sind in weiteren Ansprüchen angegeben.

Das Photovoltaiksystem umfasst wenigstens ein Photovoltaikmodul, das eine Wirkungsfläche aufweist, über die z.B. die Sonneneinstrahlung erfolgt, und das an einem Montageprofil lösbar montiert ist; ein erstes Anschlussmodul, das mit dem Montageprofil lösbar verbunden ist und das in einem ersten Gehäuse gehaltene erste Steckerkontakte aufweist, die mit Anschlussleitungen verbindbar sind; und ein zweites Anschlussmodul, das mit dem Photovoltaikmodul fest oder lösbar verbunden ist und in einem zweiten Gehäuse gehaltene zweite Steckerkontakte aufweist, die lösbar mit den ersten Steckerkontakten und vorzugsweise fest mit elektrischen Leitungen des Photovoltaikmoduls verbunden sind.

Erfindungsgemäss ist vorgesehen, dass das erste Anschlussmodul in einer Ebene parallel zur Wirkungsfläche des installierten Photovoltaikmoduls vom Montageprofil elastisch verschiebbar gehalten ist.

Das erste Anschlussmodul ist daher elastisch schwimmend oder schwebend montiert. Alternativ oder zusätzlich kann auch das zweite Anschlussmodul elastisch verschiebbar bzw. schwimmend oder schwebend montiert sein. Diese Massnahme erleichtert die Montage des Photovoltaikmoduls, insbesondere falls aufgrund von Fertigungstoleranzen oder Montagetoleranzen eine seitliche gegenseitige Abweichung der beiden Anschlussmodule vorliegt.

In vorzugsweisen Ausgestaltungen ist das erste Anschlussmodul z.B. mittels Führungselementen mit dem zweiten Anschlussmodul koppelbar, sodass diese automatisch koaxial zu einer Verschiebeachse ausgerichtet werden und entlang dieser Verschiebeachse gegeneinander verschoben werden können, um die elektrische Steckverbindung "automatisch" zu erstellen.

Durch Verwendung der erfindungsgemässen Lösung ist ein Zugriff auf die Rückseite des Photovoltaikmoduls nicht erforderlich. Stattdessen können die Photovoltaikmodule von der Frontseite her gegen das Montageprofil geführt und in einfacher Weise mechanisch und elektrisch verbunden werden. Das Montageprofil und die Photovoltaikmodule können vollständig vorgefertigt und mit den Anschlussmodulen verbunden werden. In der Folge ist nur noch ein einfacher Installationsvorgang erforderlich, der sich auf eine lineare Verschiebung der Photovoltaikmodule beschränkt. Ebenfalls in einfacher Weise können bei Wartungsarbeiten Photovoltaikmodule demontiert und ersetzt werden.

Vorzugsweise umfasst das Gehäuse des ersten Anschlussmoduls wenigstens ein mit einer Halteöffnung versehenes Montageelement, das mit dem Montageprofil, welches mit einer Montageöffnung, gegebenenfalls einer Gewindebohrung versehenen ist, durch eine Schraubengarnitur vorzugsweise lösbar verbunden wird. Die Schraubengarnitur umfasst eine durch die Halteöffnung und die Montageöffnung hindurchführbare Verbindungsschraube und ein in die Halteöffnung einsetzbares elastisches Zwischenstück, das der elastischen Lagerung des ersten Gehäuses dient. Vorzugsweise wird von der Verbindungsschraube zusätzlich eine Haltescheibe gehalten, die das Entweichen des elastischen Zwischenstücks, vorzugsweise eines elastischen Rings, aus der Halteöffnung verhindert. Die Verbindungsschraube ist somit fest mit dem Montageprofil verbunden, während das erste Anschlussmodul durch Deformation des Zwischenstücks relativ zur Verbindungsschraube verschiebbar ist. Mit diesen einfachen Massnahmen gelingt eine vorteilhafte schwimmende Lagerung der Photovoltaikmodule. Durch entsprechende Ausgestaltung der elastischen Zwischenstücke und/oder des Montageprofils, insbesondere der Halteöffnung bzw. des Halteraumes kann zudem eine bevorzugte Verschieberichtung definiert werden, sodass das erste Anschlussmodul mit geringerer Kraft z.B. vertikal und mit erhöhter Kraft z.B. horizontal verschiebbar ist. Die elastischen Zwischenstücke können dabei beliebige Formen aufweisen und/oder aus unterschiedlichen Materialien, insbesondere Elastomeren mit unterschiedlichen Härten gefertigt werden. Die Halteöffnung kann z.B. rechteckig ausgebildet sein, sodass eine Verschiebung parallel zur längeren Rechteckseite leichter möglich ist. Alle Parameter der Verschiebbarkeit, wie vertikale Verschiebestrecke, horizontale Verschiebestrecke sowie die erforderlichen Krafteinwirkungen können bedarfsweise gewählt werden.

In einer weiteren besonders bevorzugten Ausgestaltung ist vorgesehen, dass die zweiten Steckerkontakte zumindest annähernd senkrecht zur Wirkungsfläche des Photovoltaikmoduls ausgerichtet sind und dass die ersten Steckerkontakte mit einem den zweiten Steckerkontakten zugewandten ersten Endstück zumindest annähernd senkrecht und mit einem mit der zugehörigen Anschlussleitung verbundenen zweiten Endstück zumindest annähernd parallel zur Wirkungsfläche des Photovoltaikmoduls ausgerichtet sind.

Das erste und das zweite Anschlussmodul bilden eine Anschlussvorrichtung bzw. eine Steckverbindung und können zur Erstellung elektrische Kontaktverbindungen ineinander verschoben und bedarfsweise wieder voneinander gelöst werden. Photovoltaikmodule können daher in einfacher Weise mechanisch mit dem Montageprofil und elektrisch mit den Anschlussleitungen verbunden werden. Die Photovoltaikmodule können am Installationsort in einfacher Weise senkrecht gegen das Montageprofil verschoben werden, bis das erste Anschlussmodul und das zweite Anschlussmodul ineinander verschoben und die elektrischen Verbindungen zwischen den ersten und zweiten Steckerkontakten erstellt sind. Die mechanische Verbindung der Photovoltaikmodule kann dabei vor oder nach Erstellung des elektrischen Kontakts vollzogen werden. Besonders einfach gelingt dies, indem das Photovoltaikmodul an einer Stelle mit dem Montageprofil verbunden, z.B. darauf abgestützt oder daran eingehängt, und anschliessend mit der Rückseite gegen das erste Anschlussmodul geführt wird. Das Montageprofil ist z.B. ein Montagerahmen, der mit Montageelementen zur Aufnahme und/oder zum Halten eines Photovoltaikmoduls vorgesehen ist. Das Photovoltaikmodul und das erste Anschlussmodul werden dabei derart mit dem Montageprofil verbunden, dass bei der Verbindung des Photovoltaikmoduls mit dem Montageprofil zwangsläufig eine elektrische Verbindung zwischen dem ersten und zweiten Anschlussmodul resultiert. Die Photovoltaikmodule können daher in einfacher Weise installiert und deinstalliert werden. Insbesondere ist eine Vorfertigung von miteinander verbundenen Systemkomponenten möglich. Hierdurch entfällt die zeitintensive Feldkonfektionierung am Ort der Installation und es können effiziente und zumindest teilweise automatisierte Fertigungsprozesse eingesetzt werden. Vorteile resultieren daher hinsichtlich der Fertigung und auch der Installation.

Das erste Anschlussmodul ist dabei derart aufgebaut, dass qualitativ hochwertige elektrische Verbindungen resultieren und der Raumbedarf für das erste Anschlussmodul auf ein Minimum reduziert wird. Durch die Verwendung erster Steckerkontakte, die mit einem ersten, dem Photovoltaikmodul zugewandten Endstück zumindest annähernd senkrecht und mit einem mit der zugehörigen Anschlussleitung verbundenen zweiten Endstück zumindest annähernd parallel zur Wirkungsfläche des Photovoltaikmoduls ausgerichtet sind, wird der Raumbedarf für die Anschlussleitungen und die ersten Steckerkontakte minimalisiert. Beide Endstücke der ersten Steckerkontakte verlaufen hinsichtlich ihrer Funktionalität in einer optimalen Richtung. Das erste Endstück weist nach der Installation typischerweise in horizontaler Richtung gegen den zugehörigen Steckerkontakt des zweiten Anschlussmoduls. Das zweite Endstück weist hingegen in vertikaler Richtung gegen die zugehörige Anschlussleitung, die von unten zugeführt wird. Das zweite Endstück des betreffenden ersten Steckerkontakts und die zugehörige Anschlussleitung sind daher koaxial zueinander ausgerichtet, weshalb nur Zugkräfte auf die Steckerkontakte, die zugehörige Anschlussleitung und insbesondere auch auf die Verbindungsstelle einwirken. Biegekräfte, welche insbesondere die Verbindungsstelle schwächen könnten, werden vermieden. Die ersten Verbindungskontakte können z.B. in der Ausgestaltung eines Bügels vorliegen, der mit seinen Endstücken einen Winkel von vorzugsweise 90° einschliesst. Der erste Steckerkontakt weist z.B. einen kreisförmigen Querschnitt auf und ist vorzugsweise als Steckelement ausgebildet, das in einen als Buchse ausgestalteten zweiten Steckerkontakt einführbar ist.

Eingangs wurde erwähnt, dass bei neueren Entwicklungen die rückseitige Kontaktierung der Photovoltaikmodule vermieden wird und die Kontaktierung seitlich erfolgt. Die vorliegende Erfindung folgt diesem Trend nicht und zeigt, dass die Vorteile bei rückseitiger Kontaktierung und erfindungsgemässer Ausgestaltung der Anschlussmodule überraschenderweise überwiegen.

In einer vorzugsweisen Ausgestaltung umfasst das Gehäuse des ersten Anschlussmoduls eine Gehäusewand, die Wandöffnungen zur Durchführung je eines der ersten Endstücke der ersten Steckerkontakte aufweist, und an die auf einer Seite eine Aufnahmekammer mit einem der Aufnahme des zweiten Anschlussmoduls dienenden Kontaktraum und auf der anderen Seite eine Anschlusskammer mit einem Anschlussraum anschliesst, in dem die zweiten Endstücke der ersten Steckerkontakte angeordnet und vorzugsweise mit den Anschlussleitungen verbunden sind. Das Gehäuse des ersten Anschlussmoduls ist daher einfach, stabil und schlank aufgebaut. Mit der Gehäusewand werden die Verbindungstechnik der ersten und zweiten Steckerkontakte und die Anschlusstechnik mit Anschluss der Anschlussleitungen vorteilhaft voneinander getrennt.

Die Anschlusskammer ist vorzugsweise durch eine Abdeckung abschliessbar, die vorzugsweise mittels Kopplungselementen oder Rastelementen an einer angrenzenden Wand der Anschlusskammer fixierbar ist. Für Anschlussarbeiten, insbesondere das Verbinden und Einsetzen der ersten Steckerkontakte, kann die Abdeckung entfernt werden. Damit die Anschlusskammer dicht abgeschlossen ist, wird vorzugsweise ein Dichtungsring vorgesehen, der z.B. auf einem Flanschring der Abdeckung angeordnet wird und der in der Folge den Raum zwischen der Abdeckung und der Wand der Anschlusskammer abdichtet.

Die ersten Steckerkontakte können auf beliebige Weise innerhalb der Anschlusskammer fixiert werden. Z.B. können die Steckerkontakte durch Klemmen, Schrauben und/oder Briden fixiert werden. Weitere Möglichkeiten zur Fixierung der ersten Steckerkontakte sind Crimpen, Schweissen, Löten, Druckfügen, Clinchen oder Pressen. Klemmen können beispielsweise einstückig an der Gehäusewand angeordnet sein.

Vorzugsweise wird jedoch vorgesehen, dass die zweiten Endstücke der ersten Steckerkontakte je von vorzugsweise schalenförmig ausgebildeten ersten und zweiten Halteelementen fixiert werden. Besonders einfach und vorteilhaft gelingt die Fixierung der ersten Steckerkontakte, indem die ersten Halteelemente an die Gehäusewand angeformt und/oder die zweiten Halteelemente an der Abdeckung angeformt werden. Die zweiten Endstücke der ersten Steckerkontakte können daher mit den Anschlussleitungen verbunden werden, wonach die ersten Endstücke der Steckerkontakte durch Öffnungen in der Gehäusewand hindurch in den Kontaktraum eingeführt werden. In der Folge liegen die zweiten Endstücke der ersten Steckerkontakte an Halteelementen an, die an der Gehäusewand vorgesehen sind. Beim Aufsetzen der Abdeckung werden die daran vorgesehenen Halteelemente gegen die zweiten Endstücke der ersten Steckerkontakte geführt, sodass diese nach dem Einrasten der Abdeckung fixiert sind. Die Abdeckung erfüllt daher die zusätzliche Funktion der Fixierung der ersten Steckerkontakte. Durch eine formschlüssige Verrastung der Abdeckung bleiben die Steckerkontakte gesichert, bis die Abdeckung wieder entfernt wird. Vorzugsweise können die Halteelemente auch in entsprechend ausgestaltete Haltegeometrien eingreifen.

In weiteren vorzugsweisen Ausgestaltungen ist vorgesehen, dass das erste Gehäuse innerhalb des Kontaktraums für jeden der ersten Steckerkontakte eine erste Führungshülse aufweist, innerhalb der das erste Endstück des zugehörigen ersten Steckerkontakts koaxial gehalten ist und dass das zweite Gehäuse für jeden der zweiten Steckerkontakte eine zweite Führungshülse aufweist, innerhalb der der zweite Steckerkontakt koaxial gehalten ist. Die ersten und zweiten Führungshülsen sind dabei derart ausgebildet, dass sie ineinander einführbar sind. Vorzugsweise sind die zweiten Führungshülsen in die ersten Führungshülsen einführbar. Hingegen ist für verschiedene Merkmale der Anschlussmodule auch eine kinematische Umkehr möglich.

Die zweiten Führungshülsen, für die weitere vorzugsweise Ausgestaltungen nachstehend beschrieben sind, verjüngen sich vorzugsweise nach vorn, sodass die beiden Anschlussmodule bzw. die ersten und zweiten Führungshülsen in einfacher Weise ineinander eingeführt werden können, wonach die darin angeordneten Steckerkontakte automatisch koaxial zueinander ausgerichtet werden und ohne weitere Justierungen ineinander verschoben werden können. Die Führungshülsen erleichtern somit die Ausrichtung und Montage der Photovoltaikmodule, insbesondere in Fällen, in denen die ersten und zweiten Anschlussmodule z.B. nicht präzise montiert sind.

Das zweite Anschlussmodul umfasst vorzugsweise ein Gehäuse mit einer Gehäusewand, an die auf einer Seite eine Kopplungskammer mit einem Kopplungsraum anschliesst, innerhalb dessen die zweiten Führungshülsen und die zweite Steckerkontakte gehalten sind und in den die ersten Führungshülsen und die ersten Steckerkontakte des ersten Anschlussmoduls einführbar sind.

Die zweiten Führungshülsen schliessen an eine Öffnung in der zugehörigen Gehäusewand an, durch die ein Anschlusskabel oder eine Anschlussleitung hindurchführbar ist. Zur Installation wird ein Anschlusskabel vorzugsweise mit dem zugehörigen zweiten Steckerkontakt verbunden, der in der Folge von der Frontseite oder von der Rückseite in die zweite Führungshülse eingesetzt wird. Nachstehend ist beschrieben, dass der zweite Steckerkontakt in einer vorzugsweisen Ausgestaltung des zweiten Anschlussmoduls besonders vorteilhaft von der Frontseite her in die zweite Führungshülse einsetzbar ist.

In dieser Ausgestaltung weisen die zweiten Steckerkontakte einen Flanschring auf, mit dem sie vorteilhaft in einer zweiten Führungshülse verankert werden können. Dazu weisen die zweiten Führungshülsen zumindest annähernd parallel zueinander ausgerichtete elastische Lamellen auf, die sich mit steigendem Abstand von der Gehäusewand verjüngen. Dadurch können die Frontstücke der zweiten Führungshülsen aufgrund des kleineren Aussendurchmessers leichter in die ersten Führungshülsen eingeführt werden.

Die vorzugsweise blattförmigen oder stabförmigen Lamellen weisen vorzugsweise alternierend gegen die Mittelachse der Führungshülse gerichtete Stütznocken und Rastnocken auf, die entlang der Mittelachse zumindest um die Dicke des Flanschrings gegeneinander verschoben angeordnet sind. Die weiter von der Zwischenwand entfernten Rastnocken weisen vorzugsweise gegen die Zwischenwand ansteigende Flanken auf und sind daher vorzugsweise rampenförmig ausgebildet. Die zweiten Steckerkontakte können daher in die zweiten Führungshülsen eingeschoben und mit dem Flanschring über die Rastnocken geführt und dadurch zwischen den Stütznocken und den Rastnocken verankert werden. Bei diesem Vorgang werden die Lamellen elastisch auseinandergebogen, bis der Flanschring über die Rastnocken geführt ist und dahinter einrastet.

Vorzugsweise wird das zweite Anschlussmodul mit Steckerkontakten in der Ausgestaltung von Buchsen bestückt. Alternativ sind auch Steckerkontakte einsetzbar, die in Buchsen einführbare Steckelemente aufweisen.

Die beschriebenen Führungshülsen des zweiten Anschlussmoduls mit Lamellen, Stützelementen und Rastelementen sowie darin einrastbaren Steckerkontakten können in beliebigen weiteren Anschlussmodulen bzw. Steckverbindern vorteilhaft realisiert werden, die auch ausserhalb des Gebiets der Photovoltaik eingesetzt werden.

Das erste Anschlussmodul ist ferner zum elektrischen Anschluss eines fassadenintegrierten Photovoltaikmoduls vorteilhaft verwendbar.

Nachfolgend wird die Erfindung anhand von Zeichnungen näher erläutert. Dabei zeigt:
- Fig. 1a: von der Seite ein erfindungsgemässes Photovoltaiksystem 100 mit einem flächigen Photovoltaikmodul 8, das mechanisch mit einem z.B. an einem Gebäude montierten Montageprofil 9 und elektrisch über ein erstes Anschlussmodul 2, welches vorzugsweise elastisch vom Montageprofil 9 gehalten ist, und ein zweites Anschlussmodul 3 mit Anschlussleitungen 7 verbunden ist;
- Fig. 1b: das Photovoltaiksystem 100 von Fig. 1a in räumlicher Darstellung;
- Fig. 1c: das Photovoltaiksystem 100 von Fig. 1b während der Montage oder Demontage des Photovoltaikmoduls 8;
- Fig. 2: eine Schraubengarnitur 95, mittels der ein Montageflansch 205 des ersten Anschlussmoduls 2 in einer Ebene elastisch verschiebbar mit einer Profilwand 92 des Montageprofils 9 verbindbar ist;
- Fig. 3a: das erste und das zweite Anschlussmodul 2, 3 von Fig. 1a, die ineinander verschoben einen Steckverbinder 1 bilden;
- Fig. 3b: das erste und das zweite Anschlussmodul 2, 3 von Fig. 3a, die je ein Gehäuse 20 bzw. 30 aufweisen, welches entlang der in Fig. 3a gezeigten Schnittlinie A--A geschnitten ist, und mit Dichtungsringen 28, 38, die nicht geschnitten sind;
- Fig. 4a: das erste Anschlussmodul 2 mit dem darin eingesetzten zweiten Anschlussmodul 3 von Fig. 3b, mit einer Abdeckung 27, die vom ersten Anschlussmodul 2 entfernt wurde, und mit den ersten und zweiten Dichtungsringen 28, 38 ebenfalls in Schnittdarstellung;
- Fig. 4b: das erste Anschlussmodul 2 mit dem daraus herausgezogen zweiten Anschlussmodul 3 von Fig. 4a sowie mit ersten und zweiten Steckerkontakten 22; 32, die aus dem ersten und zweiten Anschlussmodul 2; 3 herausgezogen wurden; und
- Fig. 5: das zweite Anschlussmodul 3 von Fig. 4b in vergrösserte Darstellung mit einer mehrteiligen Führungshülse 31, die mehrere Lamellen 311, 312, 313, 314, ... umfasst, von denen einige mit Stütznocken 3111, 3131 und andere mit Rastnocken 3122, 3142 versehen sind, in denen ein Flanschring 321 des zugeordneten Steckerkontakts 32 verankert werden kann.

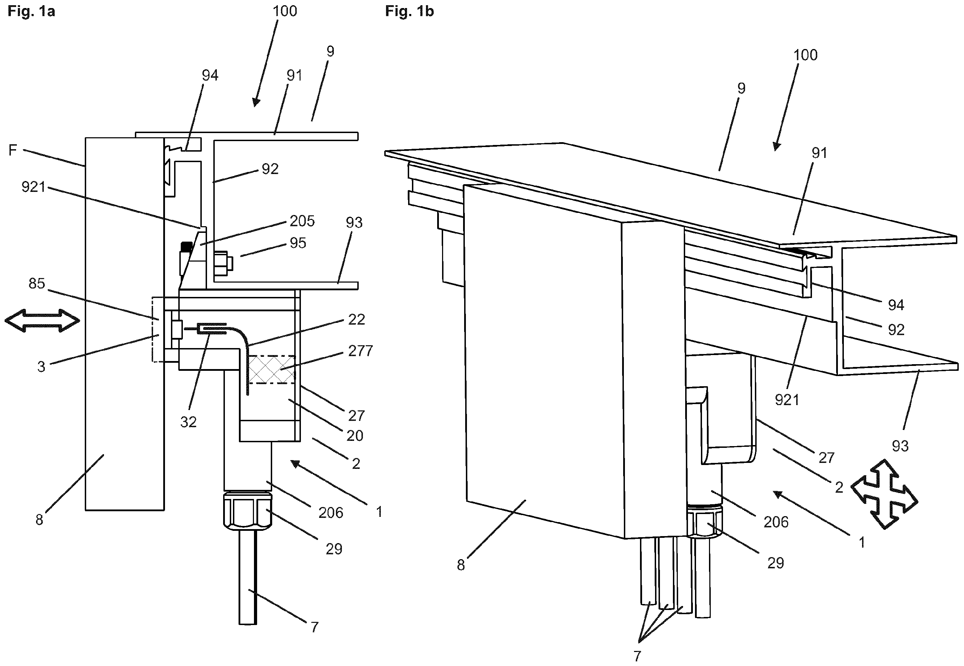

Fig. 1a zeigt von der Seite ein erfindungsgemässes Photovoltaiksystem 100 mit einem flächigen Photovoltaikmodul 8, das auf der Frontseite eine Wirkungsfläche F aufweist, über die z.B. Sonnenenergie aufgenommen wird, und das an der Rückseite oder oben von einem Montageprofil 9 gehalten und elektrisch über ein erstes und ein zweites Anschlussmodul 2; 3, die einen Steckverbinder bzw. eine elektrische Anschlussvorrichtung bilden, mit Anschlussleitungen 7 verbunden ist.

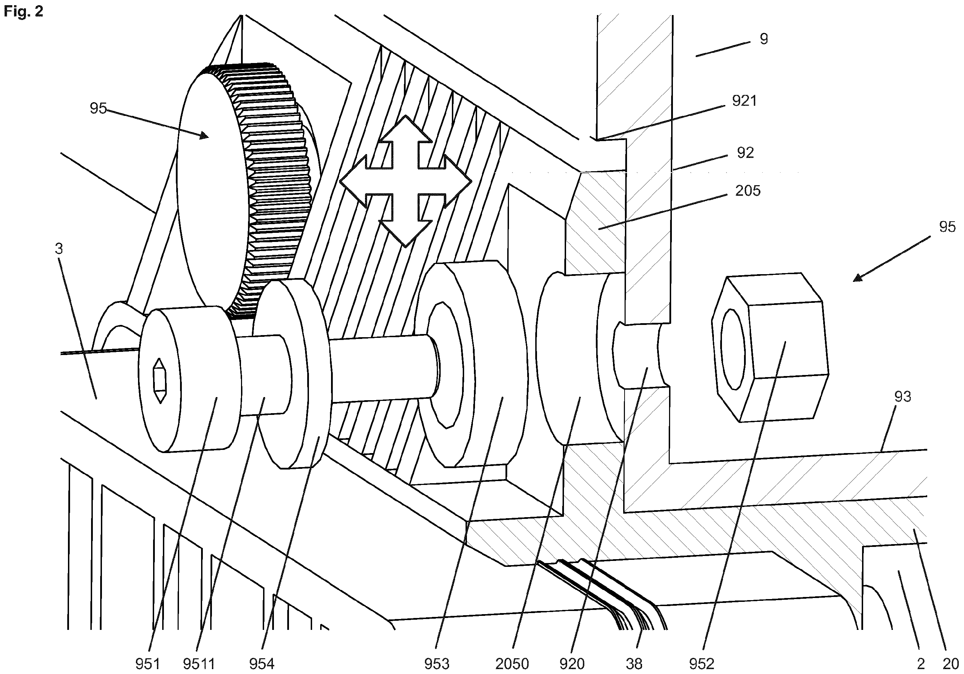

Das Montageprofil 9, das z.B. an einer Wand oder auf dem Dach eines Gebäudes montiert ist, weist eine Profilwand 92 auf, die mit einem plattenförmigen Kopfstück 91 an der Oberseite ein T-Profil und mit einem plattenförmigen Fussstück, das vom Photovoltaikmodul 8 abgewandt ist, an der Unterseite ein L-Profil bildet. Wie Fig. 2 zeigt, weist die Profilwand 92 zur Realisierung einer Verbindung mit dem ersten Anschlussmodul 2 eine Montageöffnung 920, vorzugsweise eine Passung, Durchgangs- oder Gewindebohrung, und zur Begrenzung von Verschiebungen des ersten Anschlussmoduls 2 auf der dem Photovoltaikmodul 8 zugewandten Seite einen Vorsprung 921 auf, der entlang dem Montageprofil 9 verläuft. Zum Befestigen, Einhängen oder Abstützen des Photovoltaikmoduls 8 weist das Montageprofil 9 auf der dem Photovoltaikmodul 8 zugewandten Seite ein Halteprofil 94 auf.

Das Montageprofil 9 kann ein in sich geschlossener Rahmen oder eine Montageleiste sein, die gegebenenfalls mit Schenkeln versehen ist. Die Verbindung des Montageprofils 9 mit einem Gebäudeteil erfolgt vorzugsweise durch Schrauben oder Segmentanker.

Das erste Anschlussmodul 2 weist ein Gehäuse 20 mit einem Montageflansch 205 auf, der mittels einer Schraubengarnitur 95 (siehe Fig. 2) mit dem Montageprofil 9 derart verbunden ist, dass das Anschlussmodul 2 elastisch gehalten und horizontal und/oder vertikal um eine Toleranzstrecke verschiebbar ist, wie das Pfeilkreuz in Fig. 1b symbolisiert. Das Gehäuse 20 ist vom Fussstück 93 vorzugsweise ein wenig beabstandet, sodass es eine erforderliche Toleranzbewegung ausführen kann, wenn das Photovoltaikmodul 8 mit dem zweiten Anschlussmodul 3 aufgesetzt wird. Sofern eine Fehlanpassung vorliegt, wird das erste Anschlussmodul 2 daher automatisch in die passende Position verschoben. Zur Ausführung dieser Position können die beiden Anschlussmodule 2, 3 beliebig ausgestaltete Führungselemente aufweisen, die bei einer Frontalverschiebung gegeneinander ineinander eingreifen und automatisch die gewünschte Toleranzkorrektur bewirken.

Die Montageschiene 9, das Photovoltaikmodul 8 sowie das erste und zweite Anschlussmodul 2, 3 werden somit derart verbunden, dass die beiden Anschlussmodule 2, 3 möglichst präzise zueinander ausgerichtet sind. Durch die elastische Lagerung des zweiten Anschlussmoduls werden in der Folge verbleibende Toleranzen ausgeglichen.

Das zweite Anschlussmodul 3 ist in eine Ausnehmung 85 im Photovoltaikmodul 8 eingesenkt und damit mechanisch verschraubt und elektrisch verbunden. Es ist gezeigt, dass das zweite Anschlussmodul 3 in das erste Anschlussmodul 2 eingefügt ist, wodurch die Verbindung des Photovoltaikmoduls 8 über Steckerkontakte 22, 32 (schematisch gezeigt) des ersten und zweiten Anschlussmoduls 2, 3 mit Anschlussleitungen 7 erstellt ist.

Die Anschlussleitungen 7 sind durch Aufnahmezylinder 206 in das Gehäuse 20 des ersten Anschlussmoduls 2 eingeführt und mittels Kabelmontagevorrichtungen 29 gehalten. Die Kabelmontagevorrichtungen 29 dienen der Fixierung der Anschlussleitungen 7 und weisen vorzugsweise eine Zugsentlastung auf.

Das erste Anschlussmodul 2 weist ferner eine Abdeckung 27 auf, mittels der eine Anschlusskammer abschliessbar ist. In vorzugsweisen Ausgestaltungen dient die Abdeckung 27 ferner der Fixierung der ersten Steckerkontakte 22.

Fig. 1a zeigt schematisch, dass die zweiten Steckerkontakte 32 zumindest annähernd senkrecht zur Wirkungsfläche F des Photovoltaikmoduls 8 ausgerichtet sind.

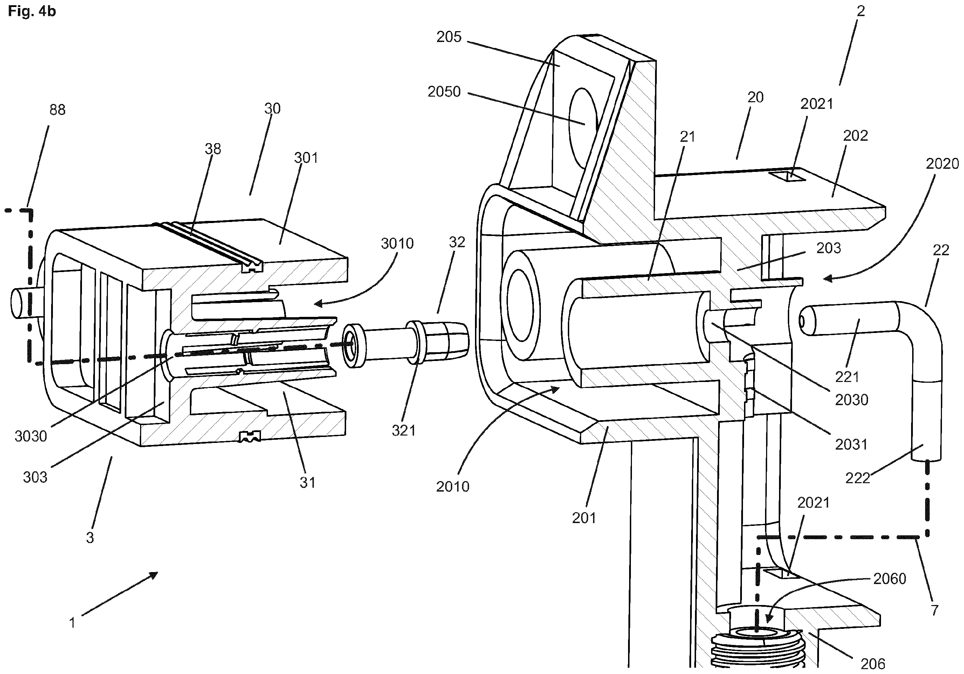

Wie die Figuren 1a und 4b zeigen, sind die ersten Steckerkontakte 22 mit einem den zweiten Steckerkontakten 32 zugewandten ersten Endstück 221 zumindest annähernd senkrecht und mit einem mit der zugehörigen Anschlussleitung 7 verbundenen zweiten Endstück 222 zumindest annähernd parallel zur Wirkungsfläche F des Photovoltaikmoduls 8 ausgerichtet.

Zur gegenseitigen Verbindung können die beiden Anschlussmodule 2 und 3 daher entlang einer Achse gegeneinander verschoben werden, die senkrecht zur Wirkungsfläche F des Photovoltaikmoduls 8 verläuft. Der erste Steckerkontakt 22, der in den als Buchse ausgestalteten zweiten Steckerkontakt 32 einsteckbar ist, weist daher zwei Schenkel bzw. Endstücke 221, 222 auf, die einen Winkel von 90° einschliessen. Durch diese Ausgestaltung der ersten Steckerkontakte 22 wird der Raumbedarf für die Anschlussleitungen 7 und die ersten Steckerkontakte 22 minimalisiert. Beide Endstücke 221, 222 der ersten Steckerkontakte 22 verlaufen hinsichtlich ihrer Funktion in einer optimalen Richtung. Das erste Endstück 221 weist nach der Installation typischerweise in horizontaler Richtung gegen den zugehörigen Steckerkontakt 32 des zweiten Anschlussmoduls. Das zweite Endstück 222 weist hingegen in vertikaler Richtung gegen die zugehörige Anschlussleitung 7, die durch den entsprechenden Aufnahmezylinder 206 von unten zugeführt wird. Das zweite Endstück 222 des betreffenden ersten Steckerkontakts 22 und die zugehörige Anschlussleitung 7 sind daher koaxial zueinander ausgerichtet, weshalb nur Zugkräfte auf die Steckerkontakte 22, die zugehörige Anschlussleitung 7 und insbesondere auch auf die Verbindungsstelle zwischen dem zweiten Endstück 222 und dem Anschlusskabel 7 einwirken. Biegekräfte hingegen, welche insbesondere die Verbindungsstelle schädigen könnten, werden vermieden.

Nebst optimalen elektrischen Verbindungen resultiert zudem ein minimaler Raumbedarf, wie Fig. 1a zeigt. In vorzugsweisen Ausgestaltungen werden die ersten Steckerkontakte 22 vorteilhaft mittels der Abdeckung 27 fixiert, die entnommen wird, um die ersten Steckerkontakte 22 mit den Anschlusskabeln 7 zu verbinden und anschliessend in Wandöffnungen 2030 einer Gehäusewand 203 des Gehäuses 20 des ersten Anschlussmoduls 2 einzusetzen. Nach dem Einsetzen der ersten Anschlusskontakte 22 wird die Abdeckung 27 auf das Gehäuse 20 aufgesetzt und z.B. durch eine Rastverbindung fixiert. Bei diesem Vorgang werden vorzugsweise Halteelemente 277 gegen die ersten Steckerkontakte 22 geführt, um diese zu fixieren (siehe Fig. 4b). Die ersten Steckerkontakte 22 können dadurch vorteilhaft fixiert werden, ohne dass weitere Montagemittel oder ein zusätzlicher Montageaufwand erforderlich wäre.

Mit einem horizontalen Pfeil ist symbolisiert, dass das Photovoltaikmodul 8 von der Frontseite her gegen das Montageprofil 9 und das daran montierte erste Anschlussmodul 2 geführt und in gleicher Weise wieder entfernt werden kann. Die Montage und Demontage der Photovoltaikmodule 8 kann somit in einfacher Weise erfolgen. Ein Zugriff auf die Rückseite der Photovoltaikmodule 8 ist nicht erforderlich, da Fertigungstoleranzen durch die elastische Lagerung der ersten Anschlussmodule 2 automatisch ausgeglichen werden.

Fig. 1b zeigt das Photovoltaiksystem 100 von Fig. 1a in räumlicher Darstellung.

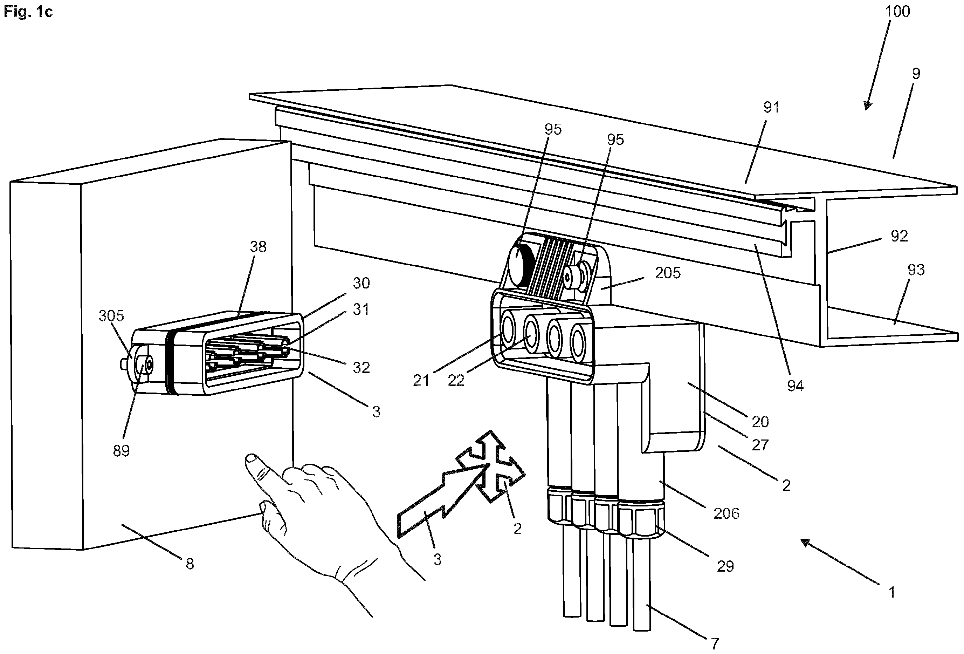

Fig. 1c zeigt das das Photovoltaiksystem 100 von Fig. 1a während der Montage oder Demontage des Photovoltaikmoduls 8, welches derart gedreht ist, dass das freiliegende zweite Anschlussmodul 3 sichtbar ist. Mit Pfeilen ist symbolisiert, dass bei der Verbindung des zweiten Anschlussmoduls 3 mit dem ersten Anschlussmodul 2 letzteres horizontal und/oder vertikal verschiebbar ist, um Toleranzen auszugleichen. Ferner ist gezeigt, dass der Montageflansch 205 in dieser vorzugsweisen Ausgestaltung mit zwei Schraubengarnituren 95 elastisch gehalten ist.

Das erste Anschlussmodul 2 weist zudem erste Führungshülsen 21 auf, in denen je ein erster Steckerkontakt 22 gehalten ist. Das zweite Anschlussmodul 3 weist dazu korrespondierende zweite Führungshülsen 31 auf, in denen je ein zweiter Steckerkontakt 32 gehalten ist. Die ersten Steckerkontakte 22 sind vorzugsweise als Steckkontakte ausgebildet, die in die zweiten Steckerkontakte 32 einführbar sind, die als Buchsen ausgebildet sind. Die zweiten Führungshülsen 31 sind der Länge nach geschlitzt und elastisch deformierbar. Ferner weisen die zweite Führungshülsen 31 frontzeitig einen geringeren Durchmesser auf als die ersten Führungshülsen 21, sodass die zweiten Führungshülsen 31 in die ersten Führungshülsen 21 einführbar sind.

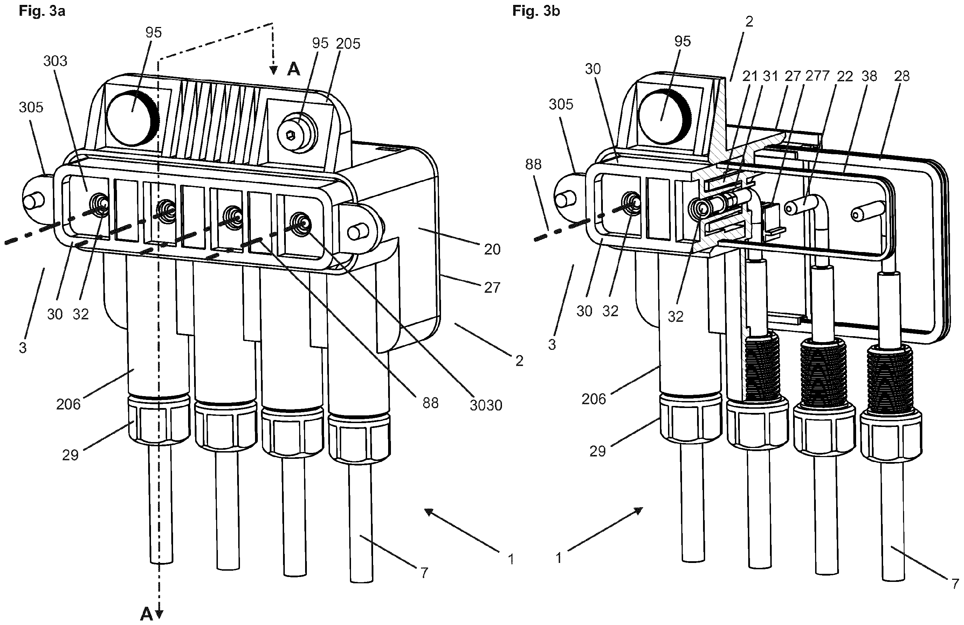

Fig. 2 zeigt das Gehäuse 20 des ersten Anschlussmoduls 2 sowie das Montageprofil 9 geschnitten entlang der Linie A--A in Fig. 3a. In Explosionsdarstellung ist ferner die zuvor erwähnte Schraubengarnitur 95 gezeigt, mittels der der Montageflansch 205 des ersten Anschlussmoduls 2 in einer Ebene elastisch verschiebbar mit der Profilwand 92 des Montageprofils 9 verbindbar ist. Der Montageflansch 205 weist eine Halteöffnung 2050 auf, deren Durchmesser grösser ist als der Durchmesser der Montageöffnung 920 im Montageprofil 9 und in die ein elastischer Ring 953 einsetzbar ist. Anschliessend wird eine Verbindungsschraube 951 der Schraubengarnitur 95 durch den elastischen Ring 953 hindurch in die vorzugsweise als Gewindebohrung ausgebildete Montageöffnung 920 eingeführt und mittels einer Schraubenmutter 952 fixiert. Vom Schaft 9511 der Verbindungsschraube 951 wird eine Haltescheibe 954 gehalten, mittels der verhindert wird, dass der elastische Ring 953 aus der Halteöffnung 2050 entweichen kann. Das erste Anschlussmodul 2 kann daher zumindest annähernd um die Differenz der Radien der Montageöffnung 920 und der Halteöffnung 2050 in jede Richtung verschoben werden, um Fertigungstoleranzen und Montagetoleranzen zu kompensieren.

Fig. 3a zeigt das erste und das zweite Anschlussmodul 2, 3 von Fig. 1a, die ineinander verschoben einen Steckverbinder 1 bilden, der vom Montagemodul 9 und vom Photovoltaikmodul 8 gelöst ist. Es ist gezeigt, dass das zweite Anschlussmodul 3 eine Gehäusewand 303 mit Anschlussöffnungen 3030 aufweist, an die die zweiten Führungshülsen 31 anschliessen. In den Führungshülsen 31 sind die zweiten Steckerkontakte 32 gehalten, die mit Anschlusskabeln 88 des Photovoltaikmoduls 8 verbindbar sind. Der Montagekörper 30 des zweiten Anschlussmoduls 3 ist seitlich mit Montageflanschen 305 versehen, mittels denen das zweite Anschlussmodul 3 mit dem Photovoltaikmodul 8 verschraubt werden kann.

Fig. 3b zeigt das erste und das zweite Anschlussmodul 2, 3 von Fig. 3a, die je ein Gehäuse 20 bzw. 30 aufweisen, welches entlang der in Fig. 3a gezeigten Schnittlinie A--A aufgeschnitten ist. Etwas versetzt geschnitten ist die für das erste Anschlussmodul 2 vorgesehene Abdeckung 27. Nicht geschnitten sind hingegen ein erster Dichtungsring 28, der zur Abdichtung des Zwischenraumes zwischen der Abdeckung 27 und dem Gehäuse 20 des ersten Anschlussmoduls 2 dient, sowie ein zweiter Dichtungsring 38, der zur Abdichtung des Raumes zwischen dem Gehäuse 20 des ersten Anschlussmoduls 2 sowie dem Gehäuse 30 des eingesetzten zweiten Anschlussmoduls 3 dient.

Es ist gezeigt, dass die ersten und zweiten Führungshülsen 21, 31 und die ersten und zweiten Steckerkontakte 22, 32 ineinander verschoben sind. Gezeigt ist ferner eines der Halteelemente 277, welches mittels der Abdeckung 27 gegen den zugehörigen ersten Steckerkontakt 22 drückt und diesen fixiert.

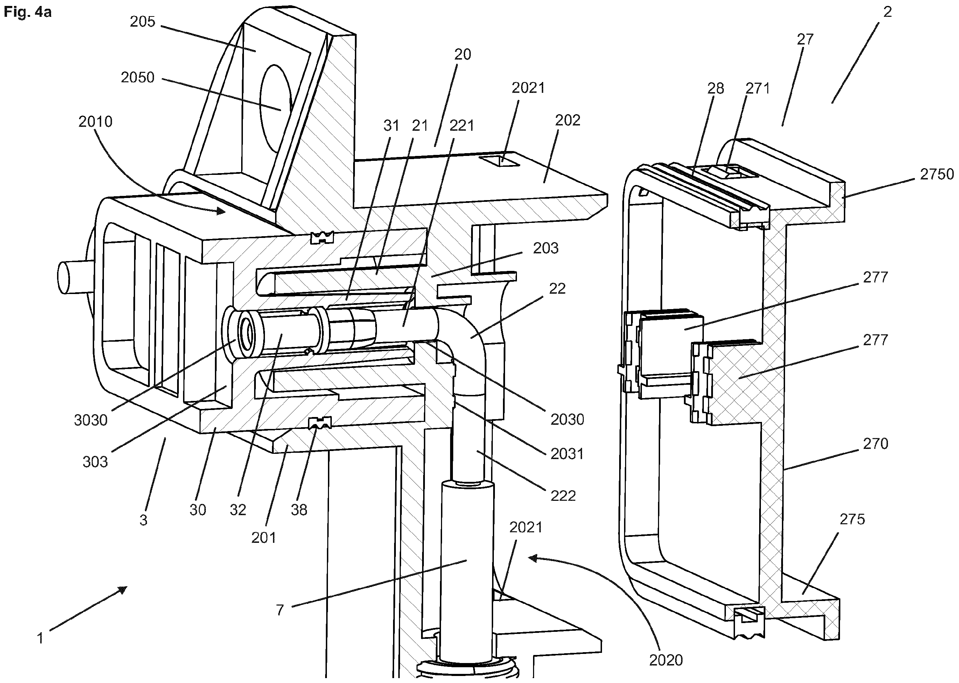

Fig. 4a zeigt das erste Anschlussmodul 2 mit dem darin eingesetzten zweiten Anschlussmodul 3 von Fig. 3b, mit der Abdeckung 27, die vom ersten Anschlussmodul 2 entfernt wurde, und mit den Dichtungsringen 28, 38 hier in Schnittdarstellung.

Es ist gezeigt, dass das Gehäuse 20 des ersten Anschlussmoduls 2 eine Gehäusewand 203 aufweist, an die frontseitig eine Aufnahmekammer 201 mit einem Kontaktraum 2010 anschliesst, in den das zweite Anschlussmodul 3 eingesetzt ist. An die Rückseite der Gehäusewand 203 schliesst eine Anschlusskammer 202 mit einem Anschlussraum 2020 an, der durch die Abdeckung 27 abschliessbar ist. Die Anschlusskammer 202 weist erste Kopplungselemente 2021 auf, in die zweite Kopplungselemente 271 einrasten können, die an der Abdeckung vorgesehen sind. Die ersten Kopplungselemente 2021 sind als Öffnungen ausgebildet, durch die hindurch die zweiten Kopplungselemente 271 wieder gelöst werden können. Erfindungsgemäss ist vorgesehen, dass durch die ersten Kopplungselemente 2021 eindringendes Wasser durch den ersten Dichtungsring 28 daran gehindert wird, in die Anschlusskammer 2020 einzudringen. Dazu schliesst ein Randflansch 275 T-förmig an die Wand 270 der Abdeckung 27 an. Der erste Dichtungsring 28 ist auf der der Anschlusskammer 2020 zugewandten Seite des Randflanschs 275 angeordnet. Das zweite Kopplungselement 271 ist auf der von der Anschlusskammer 2020 entfernten Seite des Randflanschs 275 angeordnet, an den ein Abschlussflansch 2750 anschliesst.

Der zweite Dichtungsring 38 umläuft den Körper 30 des zweiten Anschlussmoduls 3 etwa in der Mitte und liegt an der Wand der Kontaktkammer 2010 an und verhindert dadurch, dass Wasser in den Kontaktraum 2310 eindringen kann.

Gut sichtbar ist die zweite Führungshülse 31, die sich nach vorn verjüngt und darin den zweiten Steckerkontakt 32 hält, der als Buchse ausgestattet ist. In diese Buchse 32 ist der erste Steckerkontakt 22 eingeführt, der mit dem ersten Endstück 221 durch eine Wandöffnung 2030 hindurch geführt ist und mit dem zweiten Endstück 222 an einem ersten Halteelement 2031 der Gehäusewand 203 anliegt. Wie bereits beschrieben, werden die ersten Steckerkontakte 22 beim Aufsetzen der Abdeckung 27 fixiert, indem daran vorgesehene zweite Halteelemente 277 auf der Höhe der ersten Halteelemente 2031 gegen die ersten Steckerkontakte 22 geführt werden. Nach dem Aufsetzen der Abdeckung 27 kann bei der Verbindung der beiden Anschlussmodule 2, 3 daher eine Kraft auf die ersten Endstücke 221 der ersten Steckerkontakte 22 ausgeübt werden, ohne dass diese zurückweichen.

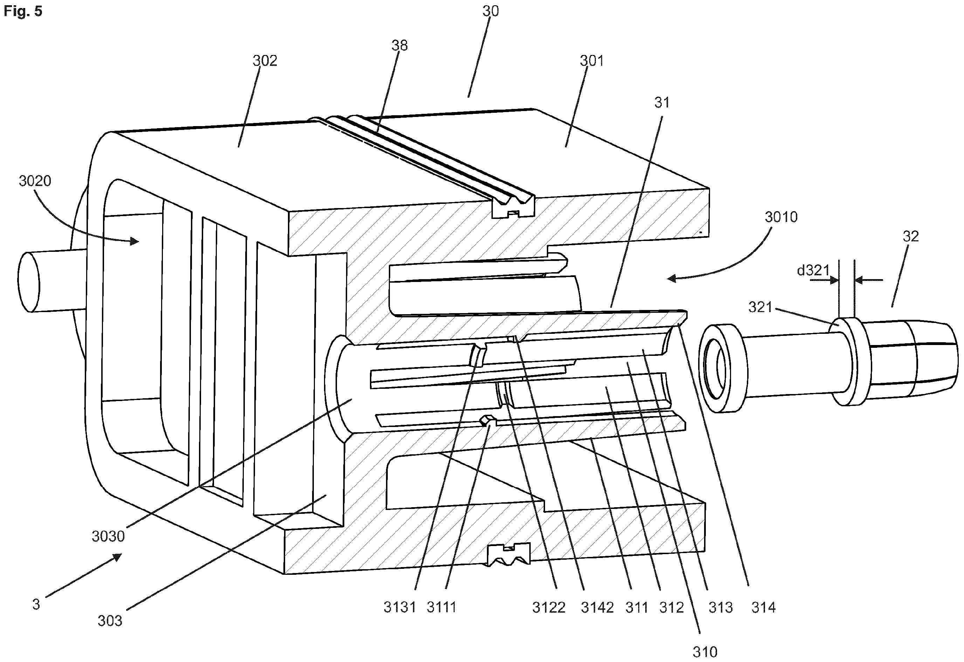

Fig. 4b zeigt das erste Anschlussmodul 2 mit dem daraus herausgezogen zweiten Anschlussmodul 3 von Fig. 4a sowie mit ersten und zweiten Steckerkontakten 22; 32, die aus dem ersten und zweiten Anschlussmodul 2; 3 herausgezogen wurden. Die vorzugsweise Ausgestaltung der ersten und zweiten Führungshülsen 21, 31 und der ersten und zweiten Steckerkontakte 22, 32 sowie das freigelegte erste Halteelement 2031 sind daher gut sichtbar. Die herausgezogen ersten und zweiten Steckerkontakte 22, 32 können in dieser Lage mit den zugehörigen Anschlussleitungen 7 und Anschlusskabel 88 verbunden und anschliessend in die ersten und zweiten Führungshülsen 21, 31 eingesetzt werden. Während die ersten Steckerkontakte 22 mit der Abdeckung 27 elegant fixiert werden, gelingt dies bei den zweiten Steckerkontakten 32 durch weitere vorteilhafte Massnahmen, die mit Bezug zu Fig. 5 näher beschrieben werden.

Fig. 5 zeigt das zweite Anschlussmodul 3 von Fig. 4b in vergrösserte Darstellung mit mehrteiligen Führungshülsen 31, die mehrere elastische Lamellen 311, 312, 313, 314, ... umfassen, von denen einige mit Stütznocken 3111, 3131 und andere mit Rastnocken 3122, 3142 versehen sind, in denen ein Flanschring 321 des zugeordneten zweiten Steckerkontakts 32 verankert werden kann.

Die Lamellen 311, 312, 313, 314, ..., die Durchschlitze 310 voneinander getrennt sind und die sich mit steigendem Abstand von der Gehäusewand 303 verjüngen, sind annähernd parallel zueinander ausgerichtet und begrenzen einen etwa hohlzylindrischen Innenraum, in den die Stütznocken 3111, 3131 und Rastnocken 3122, 3142 hineinragen. Die Stütznocken 3111, 3131 und Rastnocken 3122, 3142 sind entlang der Mittelachse der zweite Führungshülse 32 zumindest um die Dicke d321 des Flanschrings gegeneinander verschoben angeordnet, sodass der Flanschring 321 des zweiten Steckerkontakts 32 dazwischen aufgenommen werden kann. Die weiter von der Zwischenwand 303 entfernten Rastnocken 3122, 3142 weisen gegen die Zwischenwand 303 ansteigende Flanken auf und sind daher rampenförmig ausgebildet. Nachdem sie je mit einem Anschlusskabel 88 verbunden wurden, können die zweiten Steckerkontakte 32 somit von der Frontseite her in die zweiten Führungshülsen 31 eingeschoben und mit dem Flanschring 321 über die Rastnocken 3122, 3142 geführt und dadurch zwischen den Stütznocken 3122, 3142 und den Rastnocken 3122, 3142 verankert werden. Bei diesem Vorgang werden die Lamellen 311, 312, 313, 314, ... elastisch auseinandergebogen, bis der Flanschring 321 über die Rastnocken 3122, 3142 geführt ist und dahinter einrastet. Das zweite Anschlussmodul kann daher in einfacher Weise mit den zweiten Steckerkontakten 32 bestückt und an ein Photovoltaikmodul 8 oder an ein beliebiges weiteres elektrisches Gerät angeschlossen werden.

### Bezugszeichenliste

- 100: Photovoltaiksystem
- 1: Anschlussvorrichtung
- 2: erstes Anschlussmodul
- 20: erstes Gehäuse
- 201: Aufnahmekammer
- 2010: Kontaktraum
- 202: Anschlusskammer
- 2020: Anschlussraum
- 2021: erste Kopplungselemente
- 203: Gehäusewand
- 2030: Wandöffnungen
- 2031: erste Halteelemente
- 205: Montageelement, Montageflansch
- 2050: Halteöffnung
- 206: Aufnahmezylinder
- 2060: Anschlussöffnung
- 21: erste Führungshülsen
- 22: erste Steckerkontakte
- 221: erstes Endstück der ersten Steckerkontakte 22
- 222: zweites Endstück der ersten Steckerkontakte 22
- 27: Abdeckung für die Anschlusskammer
- 270: Wand der Abdeckung
- 271: zweite Kopplungselemente
- 275: Randflansch
- 2750: Abschlussflansch
- 277: zweite Halteelemente
- 28: erster Dichtungsring
- 29: Kabelmontagevorrichtung
- 3: zweites Anschlussmodul
- 30: zweites Gehäuse
- 301: Kopplungskammer
- 3010: Kopplungsraum
- 302: Verbindungskammer
- 3020: Verbindungsöffnungen
- 303: Gehäusewand
- 3030: Anschlussöffnungen
- 305: Montageflansch
- 31: zweite Führungshülsen
- 310: Schlitz
- 311: Lamelle
- 3111: Stütznocken
- 312: Lamelle
- 3122: Rastnocken
- 313: Lamelle
- 3131: Stütznocken
- 314: Lamelle
- 3142: Rastnocken
- 32: zweite Steckerkontakte, vorzugsweise Steckerbuchsen
- 321: Flanschring
- 38: zweiter Dichtungsring
- 7: Anschlussleitungen
- 8: elektrisches Modul, Photovoltaikmodul
- 85: Montageöffnung
- 88: Anschlusskabel
- 89: Montageschraube
- 9: Montageprofil
- 91: Kopfstück
- 92: Profilwand
- 920: Montageöffnung, gegebenenfalls Gewindebohrung
- 921: Anschlagkante
- 93: Fussstück
- 94: Halteprofil
- 95: Schraubengarnitur
- 951: Verbindungsschraube
- 9511: Schraubenschaft
- 952: Schraubenmutter
- 953: elastisches Zwischenstück, elastischer Ring
- 954: Haltescheibe

## Patentansprüche

1. Photovoltaiksystem (100)
mit wenigstens einem Photovoltaikmodul (8), das eine Wirkungsfläche (F) aufweist und das an einem Montageprofil (9) lösbar montiert ist,
mit einem ersten Anschlussmodul (2), das mit dem Montageprofil (9) lösbar verbunden ist und in einem ersten Gehäuse (20) gehaltene erste Steckerkontakte (22) aufweist, die mit Anschlussleitungen (7) verbindbar sind, und
mit einem zweiten Anschlussmodul (3), das mit dem Photovoltaikmodul (8) fest oder lösbar verbunden ist und in einem zweiten Gehäuse (30) gehaltene zweite Steckerkontakte (32) aufweist, die lösbar mit den ersten Steckerkontakten (22) und vorzugsweise fest mit elektrischen Leitungen des Photovoltaikmoduls (8) verbunden sind, **dadurch gekennzeichnet,**
**dass** das erste Anschlussmodul (2) in einer Ebene parallel zur Wirkungsfläche des installierten Photovoltaikmoduls (8) vom Montageprofil (9) elastisch verschiebbar gehalten ist,
und **dass** die zweiten Steckerkontakte (32) zumindest annähernd senkrecht zur Wirkungsfläche des Photovoltaikmoduls (8) ausgerichtet sind und
**dass** die ersten Steckerkontakte (22) mit einem den zweiten Steckerkontakten (32) zugewandten ersten Endstück (221) zumindest annähernd senkrecht und mit einem mit der zugehörigen Anschlussleitung (7) verbundenen zweiten Endstück (222) zumindest annähernd parallel zur Wirkungsfläche des Photovoltaikmoduls (8) ausgerichtet sind.

2. Photovoltaiksystem (100) nach Anspruch 1, **dadurch gekennzeichnet, dass** das erste Gehäuse (20) wenigstens ein mit einer Halteöffnung (2050) versehenes Montageelement (205) aufweist, das mit dem mit einer Montageöffnung (920) versehenen Montageprofil (9) durch eine Schraubengarnitur (95) lösbar verbunden ist, die eine durch die Halteöffnung (2050) und die Montageöffnung (920) hindurch geführte Verbindungsschraube (951) und ein in der Halteöffnung (2050) gehaltenes elastisches Zwischenstück (953) aufweist, das der elastischen Lagerung des ersten Gehäuses (20) dient.

3. Photovoltaiksystem (100) nach einem der Ansprüche 1 oder 2, **dadurch gekennzeichnet, dass** das erste Gehäuse (20) innerhalb des Kontaktraums (2010) für jeden der ersten Steckerkontakte (22) eine erste Führungshülse (21) aufweist, innerhalb der das erste Endstück (221) des zugehörigen ersten Steckerkontakts (22) koaxial gehalten ist und dass das zweite Gehäuse (30) für jeden der zweiten Steckerkontakte (32) eine zweite Führungshülse (31) aufweist, innerhalb der der zweite Steckerkontakt (32) koaxial gehalten ist, und dass die ersten und zweiten Führungshülsen (21, 31) derart ausgestaltet sind, dass sie vorzugsweise spielfrei ineinander einführbar sind.

4. Photovoltaiksystem (100) nach Anspruch 1, **dadurch gekennzeichnet, dass** das erste Gehäuse (20) eine Gehäusewand (203) umfasst, die Wandöffnungen (2030) zur Durchführung je eines der ersten Endstücke (221) der ersten Steckerkontakte (22) aufweist, und an die auf einer Seite eine Aufnahmekammer (201) mit einem der Aufnahme des zweiten Anschlussmoduls (3) dienenden Kontaktraum (2010) und auf der anderen Seite eine Anschlusskammer (202) mit einem Anschlussraum (2020) anschliesst, in dem die zweiten Endstücke (222) der ersten Steckerkontakte (22) angeordnet und vorzugsweise mit den Anschlussleitungen (7) verbunden sind.

5. Photovoltaiksystem (100) nach Anspruch 3 oder 4, **dadurch gekennzeichnet, dass** die Anschlusskammer (202) durch eine Abdeckung (27) abschliessbar ist, die vorzugsweise mittels Kopplungselementen oder Rastelementen (271, 2021) an einer angrenzenden Wand der Anschlusskammer (202) fixierbar ist.

6. Photovoltaiksystem (100) nach einem der Ansprüche 3 - 5, **dadurch gekennzeichnet, dass** die zweiten Endstücke (222) der ersten Steckerkontakte (22) je von vorzugsweise schalenförmig ausgebildeten ersten und zweiten Halteelementen (2031; 277) fixiert sind.

7. Photovoltaiksystem (100) nach Anspruch 6, **dadurch gekennzeichnet, dass** die ersten Halteelemente (202) an die Gehäusewand (203) angeformt sind und/oder dass die zweiten Halteelemente (277) an der Abdeckung (27) angeformt sind.

8. Photovoltaiksystem (100) nach einem der Ansprüche 1 - 7, **dadurch gekennzeichnet, dass** das zweite Gehäuse (30) eine Gehäusewand (303) umfasst, an die auf einer Seite eine Kopplungskammer (301) mit einem Kopplungsraum (3010) anschliesst, innerhalb dessen die zweiten Führungshülsen (31) gehalten sind und in den die ersten Führungshülsen (21) und die ersten Steckerkontakte (22) des ersten Anschlussmoduls (2) einführbar sind.

9. Photovoltaiksystem (100) nach Anspruch 8, **dadurch gekennzeichnet, dass** die zweiten Steckerkontakte (32) einen Flanschring (321) mit einer Dicke (d321) aufweisen und dass die zweiten Führungshülsen (31) je zumindest annähernd parallel zueinander ausgerichtete oder gegeneinander geneigte elastische Lamellenarme (311) aufweisen, von denen einige Stütznocken (3111, 3131) und/oder vorzugsweise rampenförmige Rastnocken (3122; 3142) aufweisen, die zumindest um die Dicke (d321) des Flanschrings (321) gegeneinander verschoben sind, so dass der Flanschring (321) der zweiten Steckerkontakte (32) über die Rastnocken (3122; 3142) bis zu den Stütznocken (3111, 3131) führbar und in der Folge zwischen den Stütznocken (3111, 3131) und den Rastnocken (3122; 3142) gehalten ist.

## Claims

1. Photovoltaic system (100)
with at least one photovoltaic module (8), which has an active surface (F) and which is detachably mounted on a mounting profile (9),
with a first connection module (2) which is detachably connected with the mounting profile (9) and has first plug contacts (22) held in a first housing (20) which are connectable to connection lines (7), and
with a second connection module (3) which is connected to the photovoltaic module (8) in a fixed or detachable manner and which comprises second plug contacts (32) held in a second housing (30) which are releasably connected to the first plug contacts (22) and preferably fixed to electrical lines of the photovoltaic module (8),
**characterized in**
**that** the first connection module (2) is held elastically displaceable in a plane parallel to the active surface of the installed photovoltaic module (8) by the mounting profile (9), and
**that** the second plug contacts (32) are oriented at least approximately orthogonal to the active surface of the photovoltaic module (8), and
**that** the first plug contacts (22) with a first end piece (221) facing the second plug contacts (32) are aligned at least approximately orthogonally and with a second end piece (222) connected to the corresponding connection line (7) are aligned at least approximately parallel to the active surface of the photovoltaic module (8).

2. Photovoltaic system (100) according to claim 1, **characterized in that** the first housing (20) comprises at least one mounting element (205), which is provided with a holding opening (2050) and which is detachably connected to the mounting profile (9), which is provided with a mounting opening (920), by a screw set (95), which has a connecting screw (951) guided through the holding opening (2050) and the mounting opening (920) and an elastic intermediate piece (953) held in the holding opening (2050), which is used for the elastic mounting of the first housing (20).

3. Photovoltaic system (100) according to claim 1 or 2, **characterized in that** the first housing (20) comprises within the contact space (2010) for each of the first plug contacts (22) a first guide sleeve (21), within which the first end piece (221) of the associated first plug contact (22) is held coaxially and that the second housing (30) has a second guide sleeve (31) for each of the second plug contacts (32), within which the second plug contact (32) is held coaxially, and that the first and second guide sleeves (21, 31) are designed in such a way that they can be inserted into one another preferably without play.

4. Photovoltaic system (100) according to claim 1, **characterized in that** the first housing (20) comprises a housing wall (203) which has wall openings (2030) for the passage of one each of the first end pieces (221) of the first plug contacts (22), and on one side a receiving chamber (201) with a contact space (2010) for receiving the second connection module (3) and on the other side a connection chamber (202) with a connection space (2020) in which the second end pieces (222) of the first plug contacts (22) are arranged and preferably connected to the connecting lines (7).

5. Photovoltaic system (100) according to claim 3 or 4, **characterized in that** the connection chamber (202) can be closed off by a cover (27) which can be fixed to an adjacent wall of the connection chamber (202), preferably by means of coupling elements or latching elements (271, 2021).

6. Photovoltaic system (100) according to any one of claims 3-5, **characterized in that** the second end pieces (222) of the first plug contacts (22) are each fixed by preferably shell-shaped first and second holding elements (2031; 277).

7. Photovoltaic system (100) according to claim 6, **characterized in that** the first holding elements (202) are formed on the housing wall (203) and/or that the second holding elements (277) are formed on the cover (27).

8. Photovoltaic system (100) according to any one of claims 1-7, **characterized in that** the second housing (30) comprises a housing wall (303) to which a coupling chamber (301) with a coupling space (3010) is connected on one side, within which the second guide sleeves (31) are held and in which the first guide sleeves (21) and the first plug contacts (22) of the first connection module (2) can be inserted.

9. Photovoltaic system (100) according to claim 8, **characterized in that** the second plug contacts (32) have a flange ring (321) with a thickness (d321) and that the second guide sleeves (31) each have elastic lamellar arms which are aligned at least approximately parallel to one another or are inclined towards one another (311), some of which have supporting cams (3111, 3131) and/or preferably ramp-shaped latching cams (3122; 3142), which are displaced relative to one another by at least the thickness (d321) of the flange ring (321), so that the flange ring (321 ) of the second plug contacts (32) are moveable via the locking cams (3122; 3142) up to the supporting cams (3111, 3131) and subsequently held between the supporting cams (3111, 3131) and the locking cams (3122; 3142).

## Revendications

1. Système photovoltaïque (100)
avec au moins un module photovoltaïque (8) qui a une surface utile (F) et qui est monté de manière amovible sur un profilé de montage (9),
avec un premier module de connexion (2) qui est connecté de manière amovible avec le support profilé (9) et présente des premiers contacts enfichables (22) logés dans un premier boîtier (20) pouvant être raccordé à des lignes de raccordement (7), et
avec un deuxième module de raccordement (3) qui est raccordé au module photovoltaïque (8) de manière fixe ou amovible et qui comprend dans un second boîtier (30) des seconds contacts enfichables (32) qui sont reliés de manière amovible aux premiers contacts enfichables (22) et de préférence fixés à des lignes électriques du module photovoltaïque (8), **caractérisé en ce que**
le premier module de raccordement (2) est tenu élastiquement déplaçable dans un plan parallèle à la surface active du module photovoltaïque installé (8) par le profilé de montage (9), et
que les deuxièmes contacts enfichables (32) sont orientés au moins à peu près de manière orthogonale à la surface active du module photovoltaïque (8), et
que les premiers contacts enfichables (22) avec un premier embout (221) tournée vers les deuxièmes contacts enfichables (32) sont orientés au moins approximativement de manière orthogonale et avec un deuxième embout (222), connecté à la ligne de raccordement (7) correspondante, sont orientés au moins approximativement de manière parallèle à la surface active du module photovoltaïque (8).

2. Système photovoltaïque (100) selon la revendication 1, **caractérisé en ce que** le premier boîtier (20) présente au moins un élément de montage (205), qui est muni d'une ouverture de maintien (2050) et qui est relié de manière amovible au profilé de montage (9), qui est muni d'une ouverture de montage (920), par un ensemble de vis (95), qui présente une vis de connexion (951) guidée à travers l'ouverture de maintien (2050) et l'ouverture de montage (920) et une pièce intermédiaire élastique (953) maintenue dans l'ouverture de maintien (2050), qui sert au montage élastique du premier boîtier (20).

3. Système photovoltaïque (100) selon une des revendications 1 ou 2, **caractérisé en ce que** le premier boîtier (20) présente à l'intérieur de l'espace de contact (2010) pour chacun des premiers contacts enfichables (22) un premier manchon de guidage (21), à l'intérieur lequel le premier embout (221) du premier contact mâle (22) associé est maintenu coaxialement et **en ce que** le deuxième boîtier (30) présente un deuxième manchon de guidage (31) pour chacun des deuxièmes contacts mâles (32), à l'intérieur duquel le deuxième contact à fiche (32) est maintenu coaxialement et que les première et deuxième douilles de guidage (21, 31) sont conçus de manière à pouvoir être insérées l'une dans l'autre de préférence sans jeu.

4. Système photovoltaïque (100) selon la revendication 1, **caractérisé en ce que** le premier boîtier (20) comprend une paroi de boîtier (203) qui présente des ouvertures de paroi (2030) pour le passage de chacune des premiers embouts (221) des premiers contacts enfichables (22), et d'un côté une chambre de réception (201) avec un espace de contact (2010) pour recevoir le deuxième module de connexion (3) et de l'autre côté une chambre de connexion (202) avec un espace de connexion (2020) en lesquelles les deuxièmes pièces d'extrémité (222) de la première fiche contactent (22) sont logés et sont de préférence connectées aux lignes de connexion (7).

5. Système photovoltaïque (100) selon la revendication 3 ou 4, **caractérisé en ce que** la chambre de raccordement (202) peut être obturée par un couvercle (27) qui peut être fixé sur une paroi adjacente de la chambre de raccordement (202), de préférence au moyen d'éléments d'accouplement ou d'éléments de verrouillage (271, 2021).

6. Système photovoltaïque (100) selon une des revendications 3 - 5, **caractérisé en ce que** les deuxièmes embouts (222) des premiers contacts enfichables (22) sont fixés chacun par des premier et deuxième éléments de maintien (2031; 277) de préférence en forme de coque.

7. Système photovoltaïque (100) selon la revendication 6, **caractérisé en ce que** les premiers éléments de maintien (202) sont formés sur la paroi du boîtier (203) et/ou **en ce que** les deuxièmes éléments de maintien (277) sont formés sur le couvercle (27).

8. Système photovoltaïque (100) selon une des revendications 1 - 7, **caractérisé en ce que** le deuxième boîtier (30) comprend une paroi de boîtier (303) à laquelle une chambre de couplage (301) avec un espace de couplage (3010) est connectée sur un côté, à l'intérieur duquel les secondes manchons de guidage (31) sont maintenues et dans lequel les premières manchons de guidage (21) et les premiers contacts enfichables (22) du premier module de raccordement (2) peuvent être insérés.

9. Système photovoltaïque (100) selon la revendication 8, **caractérisé en ce que** les deuxièmes contacts enfichables (32) présentent une collerette (321) d'une épaisseur (d321) et que les deuxièmes manchons de guidage (31) présentent chacune des bras lamellaires élastiques qui sont alignés au moins approximativement parallèlement l'un à l'autre ou sont inclinés l'un vers l'autre (311), dont certains présentent des cames d'appui (3111, 3131) et/ou de préférence des cames d'encliquetage en forme de rampe (3122 ; 3142), qui sont décalées par rapport à entre eux par au moins l'épaisseur (d321) de l'anneau de bride (321), de sorte que l'anneau de bride (321) de la seconde fiche (32) est movible entre les cames de verrouillage (3122 ; 3142) jusqu'aux cames de support (3111 , 3131) et est ensuite maintenu entre les cames de support (3111, 3131) et les cames de verrouillage (3122; 3142).
